# EUROPÄISCHE PATENTSCHRIFT

(11) **EP 0 661 203 B1**
(45) Veröffentlichungstag und Bekanntmachung des Hinweises auf die Patenterteilung: **14.04.1999**
(21) Anmeldenummer: 94120913.2
(22) Anmeldetag: 29.12.1994
(51) Int. Cl.: B62M 1/02

(54) **Tretlagergetriebe**
Gear crank
Dispositif de manivelle

(30) Priorität: 30.12.1993 DE 4345008
(43) Veröffentlichungstag der Anmeldung: 05.07.1995
(73) Patentinhaber: Poier, Hermann, 65824 Schwalbach (DE)
(72) Erfinder: Poier, Bruno, D 61231 Bad Nauheim (DE)
(74) Vertreter: Meier, Robert, Dipl.-Ing.

(56) Entgegenhaltungen:
- FR-A- 468 296
- FR-A- 2 633 690

## Beschreibung

Die Erfindung bezieht sich auf ein Tretlagergetriebe, bei dem die in einer Lagerschale fest verbundenen mit dem Fahrradrahmen gelagerten Tretkurbelarme mittels eines Getriebes zentral verbunden sind und an deren äußeren freien Enden jeweils eine frei drehbare Pedale gelagert ist, und bei dem die Kurbelarmachsen in einer Achslinie, jedoch getrennt gelagert sind.

Bekanntgeworden ist ein Tretlagergetriebe, bei dem die in einer fest mit dem Fahrradrahmen verbundenen Lagerschale gelagerten Tretkurbelarme mittels eines Getriebes zentral verbunden sind und an deren äußeren Enden jeweils eine frei drehbare Pedale angeordnet ist, und bei dem die Kurbelarme in einer Achslinie, jedoch getrennt, gelagert sind.

Die Kurbelarme sind getrennt geführt, aber schlüssig über das Tretlagergetriebe so miteinander verbunden, daß sich für die rücklaufende Pedale eine größere Winkelgeschwindigkeit ergibt, als für die vorlaufende kraftbeaufschlagte Pedale (FR 2633690).

Die Tretkurbelarme dieses bekannten Tretlagergetriebes haben einen Winkelabstand von 180° . Es weist keine Möglichkeit zur Einjustierung seiner Bestandteile auf. Es eignet sich allenfalls zur Benutzung auf waagerechten Fahrbahnen. Schon bei geringen Steigungen wird die Einwirkung des Fußes auf eine Pedale schon vor Erreichen des 180° Umkehrpunktes nicht ausgeschlossen. Da in dem bekannten Tretlagergetriebe auch keine Freiläufe vorgesehen sind, kann nicht sichergestellt werden , daß eine Beeinflussung des Getriebes in Rückwärtsrichtung erfolgt.

Der Mangel an Feinabstimmung des Getriebes macht sich besonders deshalb nachteilig bemerkbar, weil viele Zahnradpaarungen vorgesehen sind.

Demgegenüber liegt der Erfindung die Aufgabe zugrunde, ein Tretlagergetriebe mit besserem Wirkungsgrad zu schaffen, welches auch das Fahren gegen einen höheren Widerstand erleichtert.

Es wurde gefunden, daß sich diese Aufgabe dadurch lösen läßt, daß auf jeder Kurbelarmachse, außerhalb der Lagerschale, ein Kettenrad und innerhalb der Lagerschale ein Zahnrad mit einem Teilzahnkranz sowie ein Zahnrad mit einem vollen Zahnkranz befestigt sind, dessen Durchmesser kleiner ist als der Durchmesser des Teilzahnkranzes, daß jeder Teilzahnkranz auf der einen Kurbelarmachse über ein Ritzel, einer Getriebewelle und ein Antriebszahnrad mit dem auf der anderen Kurbelarmachse sitzenden Zahnrad und mit dem zugehörigen Kettenrad in Antriebsverbindung steht.

Weiterbildungen der Erfindung sind in den Ansprüchen 2 bis 5 gekennzeichnet.

Die Tretkurbelarme sind zwischen zwei Punkten A und B in einem Winkel abstand angeordnet, wodurch sichergestellt wird, daß ein Drehmomentenantrieb nur in den Bereichen erzeugt werden kann, in welchen der jeweilige Fuß einen optimalen Druck auf die Pedale ausüben kann. Dabei stellen Freiläufe gemäß Anspruch 3 sicher, daß die Pedalen nicht versehentlich rückwärts betätigt werden können.

Die in den Ansprüchen 4 und 5 gekennzeichneten Nabenverbindungen sind notwendig, um die Winkelstellung der Tretkurbelarme sowie das Getriebe einzujustieren und eine Feineinstellung des Tretlagergetriebes herzustellen. Weitere Nabenverbindungen dienen zum Einstellen der Tretkurbelarme und damit der Positionen A und B. Diese Einstellung ist nicht nur zur Feinjustierung notwendig, sondern vor allem auch dann, wenn das Tretkurbelgetriebe beispielsweise in bergigen Bereichen mit Steigungen und abschüssigen Fahrbahnen eingesetzt wird. Man erreicht durch die Nabenverbindung, daß auch die Punkte A und B gegenüber geneigten Fahrbahnen eingehalten werden können.

Ein wesentlicher Vorteil der vorliegenden Erfindung besteht darin, daß bei jeder Kraftübertragung von einem Tretkurbelarm auch das zugehörige Kettenrad jeweils nur zwei Zahnräderpaare zwischen dem Tretkurbelarm und dem Kettenrad sowie zwischen dem anderen Tretkurbelarm und einem weiteren Kettenrad eingeschaltet sind. Dadurch werden Reibungsverluste wesentlich herabgesetzt. Die nicht beanspruchten Zahnradpaarverbindungen laufen im Leerlauf mit.

Ein Ausführungsbeispiel der Erfindung wird nachfolgend anhand der Figuren erläutert.

Es zeigt:
Fig. 1 schematisch eine Teil-Seitenansicht des Tretlagergetriebes,
Fig. 2 einen Schnitt durch Fig. 1 entlang der Linie II II,
Fig. 3 schematisch eine Darstellung der Betätigung der rechten Pedale,
Fig. 4 schematisch eine Darstellung der Betätigung der linken Pedale,
Fig. 5a ein Konstruktionsdetail und
Fig. 5b ein weiteres Konstruktionsdetail.

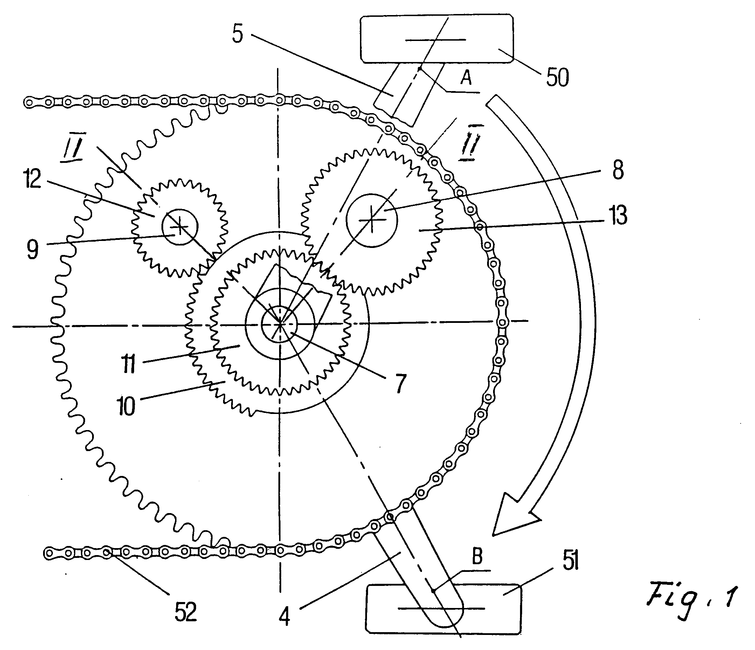

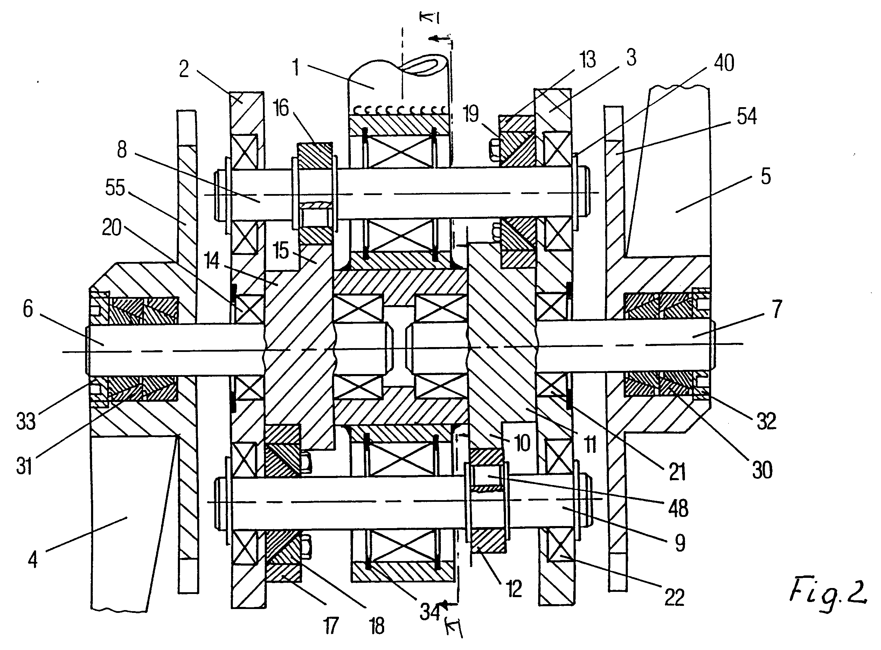

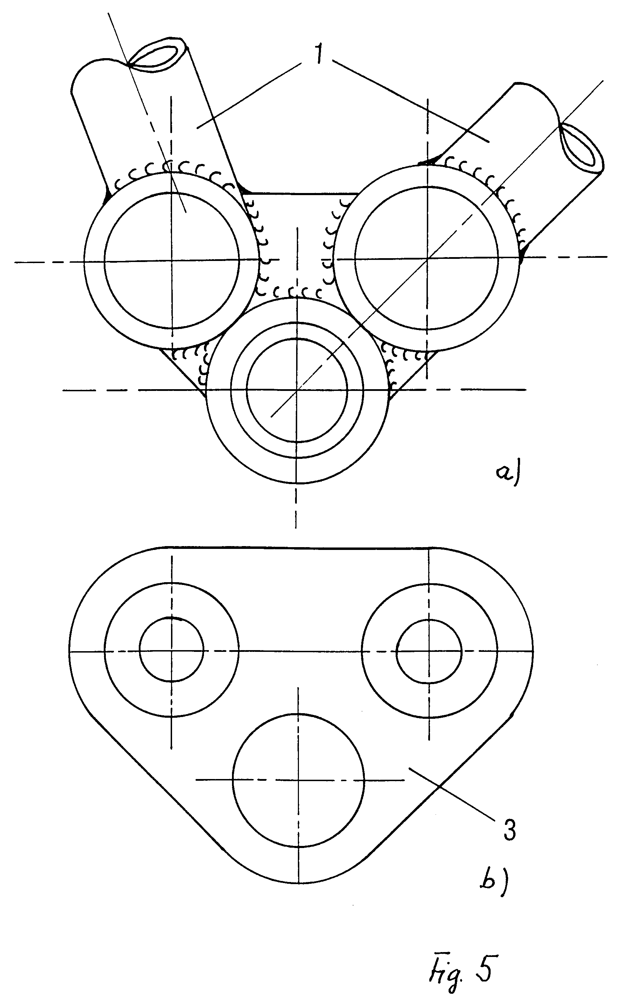

Fig. 5a zeigt eine schematische Seitenansicht entlang der Line V V in Fig. 2 mit dem unteren Bereich eines Fahrradrahmens 1 und Teilen eines Tretlagergetriebes, nämlich den Lagerschalen für Wellen 7, 8 und 9 gemäß Fig. 1. In einer nicht bezeichneten unteren Lagerschale ist eine rechte Kurbelarmachse 7, in der rechten Lagerschale eine Getriebewelle 8 und in der linken Lagerschale eine Getriebewelle 9 gelagert.

Fig. 5b zeigt in Draufsicht eine rechte Lagerplatte 3, die in Fig. 1 im Schnitt dargestellt ist.

Die Getriebewellen 8 und 9 ragen beidseitig aus ihren Lagerschalen heraus, in denen sie in nicht bezeichneten Wälzlagern gelagert sind, die innerhalb der Lagerschalen jeweils zwischen zwei inneren Wellensicherungsringen 34 sitzen.

Die aus ihrer Lagerschale herausragenden Enden der Getriebewellen 8 und 9 sind in der rechten Lagerplatte 3 und einer linken Lagerplatte 2 zusätzlich in Lagern 22 gelagert, die durch äußere Wellensicherungsringe 40 gesichert sind.

Während die rechte und die linke Hälfte des Tretlagergetriebes über die durchgehenden Getriebewellen 8 und 9 miteinander in Wirkverbindung stehen, sind die linke Kurbelwellenachse 6 und die rechte Kurbelwellenachse 7 voneinander getrennt.

Die rechte Kurbelwellenachse 7 ist mittels eines Freilaufes 21 in der rechten Lagerplatte 3 gelagert. Auf dem herausragenden Bereich der rechten Kurbelwellenachse 7 sitzt mittels einer Nabenverbindung 30 und eines Gewinderinges 32 einstellbar ein rechtes Kettenrad 54 mit einem Tretkurbelarm 5 an dessen freien Ende drehbar eine rechte Pedale 50 gelagert ist.

Das aus der linken Lagerplatte 2 herausragende Ende der linken Kurbelarmachse 6 ist in der Lagerplatte 2 mittels eines Freilaufes 20 gelagert. Mittels einer Nabenverbindung 31 und eines Gewinderinges 32 sitzt auf dem aus der Lagerplatte 2 herausragenden Ende der linken Kurbelarmachse 6 ein linkes Kettenrad 55, an das über einen linken Tretkurbelarm 4 eine linke Pedale 51 drehbar angeschlossen ist. Über das rechte Kettenrad 54 ist eine rechte Antriebskette 52 und über das linke Kettenrad 55 eine nicht dargestellte linke Antriebskette geführt.

Wie die Fig. 1 und 2 erkennen lassen, sitzt hinter der rechten Lagerplatte 3 auf der rechten Kurbelarmachse 7 fest ein Zahnrad mit einem Teilzahnkranz 10 und ein Zahnrad mit vollem Zahnkranz 11. Diese Zahnräder können einstückig aber auch zweistückig ausgebildet sein.

Der Zahnkranz 10 kämmt mit einem Ritzel 12, das mittels einer Paßfeder 48 auf der Getriebewelle 9 angeordnet ist. Der volle Zahnkranz 11 kämmt mit einem Antriebszahnrad 13, das über eine lösbare Nabenverbindung 19 auf dem rechten Ende der Getriebewelle 6 sitzt.

Auf der linken Getriebewelle 6 sitzt fest hinter der linken Lagerplatte 2 ein Zahnrad mit vollem Zahnkranz 14 und ein Zahnrad mit Teilzahnkranz 15. Der volle Zahnkranz 14 kämmt mit einem Antriebsrad 17, das mittels einer Nabenverbindung 18 mit dem linken Ende der Getriebewelle 9 verbunden ist. Der Teilzahnkranz 15 kämmt mit einem Ritzel 16, das mittels einer Paßfeder 49 auf dem linken Ende der Getriebewelle 8 sitzt. Die Zahnräder mit den Zahnkränzen 14 und 15 können einteilig aber auch zweiteilig ausgebildet sein.

Die Ritzel 12 und 16 haben je 30 Zähne.

Die Zahnräder mit den Vollzahnkränzen 11 und 14 sowie die Antriebszahnräder 13 und 17 haben je 45 Zähne.

Die Zahnräder mit den Teilzahnkränzen 10 und 15 haben je 18 Zähne. In einem Bereich von 108° bezogen auf den Gesamtumfang von 360°.

Die Zahnräder mit den Teilzahnkränzen 10 und 15 lassen sich aus einem Zahnrad mit 60 Zähnen herstellen.

Das Antriebsverhältnis der Zahnradpaare 11 und 13 sowie 14 und 17 beträgt 1:1.
Das Antriebsverhältnis der Zahnradpaare 10 und 12 sowie 15 und 16 beträgt 2:1.

Alle Zahnräder haben ein Modul 1.

Die Freiläufe 20 und 21 sind so zu montieren, daß die Kurbelarmachsen 6 und 7 sich nur in Antriebsrichtung drehen lassen.

Das Tretlagergetriebe ist so zu montieren, daß das Zahnrad mit dem Teilzahnkranz 15 und das Ritzel 16 auf einem Weg von 120° ineinandergreifen und das Zahnradpaar 10 und 12 im selben Zeitraum auf einem Weg von 120° keine Berührung haben.

Weiterhin ist das Tretlagergetriebe so zu montieren, daß das Zahnradpaar 10 und 12 auf einem Weg von 120° ineinandergreift und das Zahnradpaar 15 und 16 im selben Zeitraum auf einem Weg von 240 keine Berührung hat.

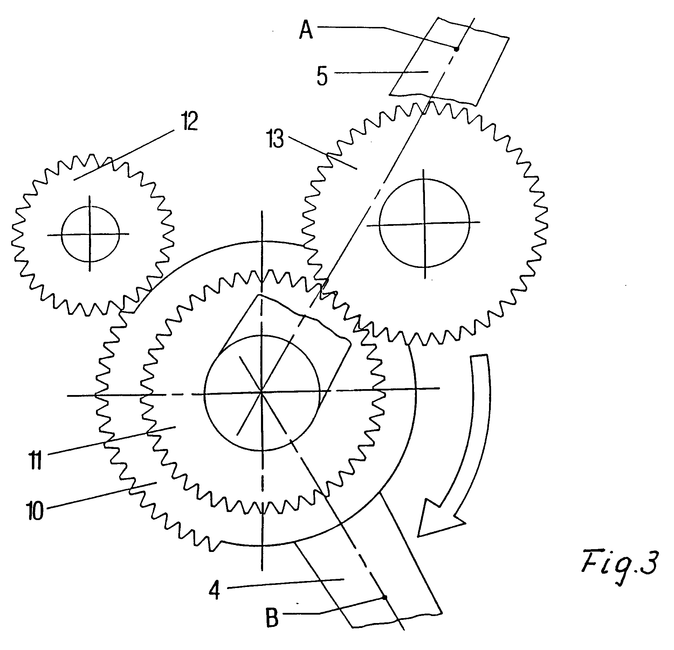

Das Tretlagergetriebe ist unter Verwendung der beiden Nabenverbindungen 18 und 19 zudem so zu montieren, daß es bei dem Zahnradpaar 10 und 12 zur Zahnflächenberührung kommt (Fig. 3).
Dann wird der Tretkurbelarm 5 im Winkel von 60° gegenüber der horizontalen Mittellinie des Tretlagergetriebes auf die Kurbelwellenachse 7 gesetzt und dort mit Hilfe deren Nabenverbindung 30 justiert.

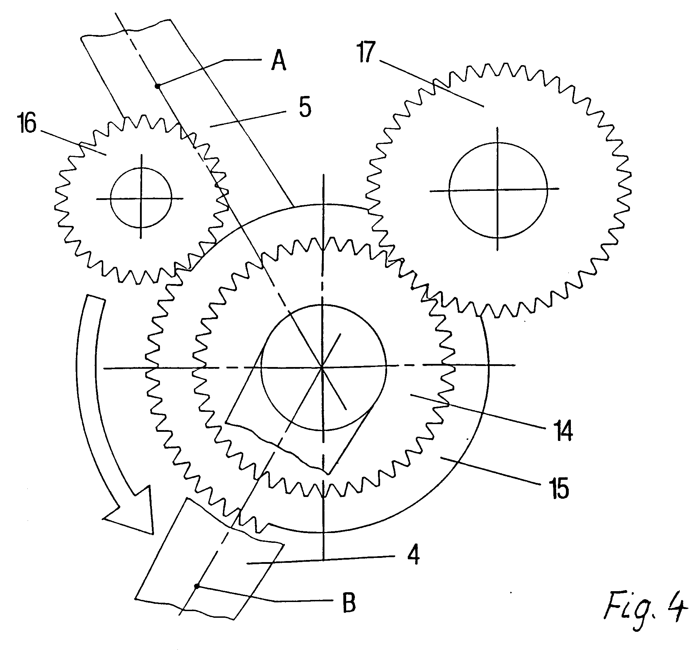

Daraufhin wird die linke Kurbelarmachse 6 so gedreht, daß sich der letzte Zahn vom Teilzahnkranz 15 aus dem Ritzel 16 löst. (Fig. 4)

Der linke Tretkurbelarm 4 wird dann im Winkel von 60° unter der horizontalen Mittellinie des Tretlagergetriebes auf der linken Kurbelarmachse 6 mit Hilfe der Nabenverbindung 31 montiert.

Die Funktionsweise des Tretlagergetriebes ist wie folgt:

In einer Stellung gemäß Fig. 3 wird der Tretkurbelarm 5 durch Muskelkraft angetrieben. Er bewegt sich daraufhin von Punkt A nach Punkt B um 120° . Bei dieser Bewegung treibt der Teilzahnkranz des Zahnrades 10 das Ritzel 12 im Verhältnis 2:1 an. Das Antriebszahnrad 17 treibt das Zahnrad mit dem vollen Zahnkranz 14 an und somit die linke Kurbelarmachse 6, die fest mit dem Tretkurbelarm 4 und dem Kettenrad 55 verbunden ist.

Der Tretkurbelarm 4 hat sich dabei um 240° verschwenkt, nämlich vom Punkt B nach Punkt A. Im selben Zeitraum hat sich der rechte Tretkurbelarm 5 vom Punkt nach Punkt B verschwenkt.

Daraufhin wird der Tretkurbelarm 4 durch Muskel kraft angetrieben. Der Tretkurbelarm 4 bewegt sich von Punkt A nach Punkt B um 120° . Bei dieser Bewegung treibt das Zahnrad mit dem Teilzahnkranz 15 das Ritzel 16 an (im Verhältnis 2:1). Das Antriebszahnrad 13 treibt das Zahnrad mit dem vollen Zahnkranz 11 an und somit die rechte Kurbelarmachse 7 mit der fest der rechte Tretkurbelarm 5 und das Kettenrad 54 verbunden sind.

Der Tretkurbelarm 5 hat sich dabei um 240° verschwenkt, wohingegen sich der linke Tretkurbelarm 4 im selben Zeitraum nur um 120° verschwenkt hat.

Die Kettenräder 54 und 55 führen getrennt auf die nicht dargestellte Hinterradantriebs-Nabenachse.

Die beiden Kettenräder 54 und 55 sind mittels der Freiläufe 20 und 21 so montiert, daß die jeweils schnellere Kette in Antriebsrichtung das Kettenrad antreibt, und die langsamere Kette in Antriebsrichtung freiläuft (vergl. DE 41 29 082A1)

Der Vorteil des Tretlagergetriebes mit zwei voneinander getrennten Tretlagerarmen gegenüber herkömmlichen Tretlagern mit fest verbundenen Tretlagerarmen ist eine beträchtliche Kraftersparnis beim Radfahren.

### Liste der verwendeten Bezeichnungen

- 1: Fahrradrahmen
- 2: linke Lagerplatte
- 3: rechte Lagerplatte
- 4: linker Tretkurbelarm
- 5: rechter Tretkurbelarm
- 6: linke Kurbelarmachse
- 7: rechte Kurbelarmachse
- 8: Getriebewelle
- 9: Getriebewelle
- 10: Zahnrad mit Teilzahnkranz
- 11: Zahnrad mit vollem Zahnkranz
- 12: Ritzel
- 13: Antriebszahnrad
- 14: Zahnrad mit vollem Zahnkranz
- 15: Zahnrad mit Teilzahnkranz
- 16: Ritzel
- 17: Antriebszahnrad
- 18: lösbare Nabenverbindung
- 19: lösbare Nabenverbindung
- 20: Freilauf
- 21: Freilauf
- 22: Lager
- .:
- .:
- .:
- 30: Nabenverbindung
- 31: Nabenverbindung
- 32: Gewindering
- 33: Gewindering
- 34: Wellensicherungsring innen
- .:
- .:
- .:
- 40: Wellensicherungsring außen
- .:
- .:
- .:
- 48: Paßfeder
- 49: Paßfeder
- 50: Pedal
- 51: Pedal links
- 52: Antriebskette rechts
- 53: Antriebskette links
- 54: Kettenrad rechts
- 55: Kettenrad links

## Patentansprüche

1. Tretlagergetriebe, bei dem die in einer Lagerschale (2, 3), fest verbunden mit dem Fahrradrahmen (1), gelagerten Tretkurbelarme (4, 5) mittels eines Getriebes (10, 11; 14, 15; 7, 12, 17; 8, 10, 19) zentral verbunden sind und an deren äußeren freien Enden jeweils eine frei drehbare Pedale (50, 51) gelagert ist und bei dem die Kurbelarmachsen (6, 7) in einer Achslinie jedoch getrennt gelagert sind,
dadurch gekennzeichnet,
daß auf jeder Kurbelarmachse (6, 7), außerhalb der Lagerschale (2, 3) ein Kettenrad (54, 55) und innerhalb der Lagerschale (2, 3) ein Zahnrad mit einem Teilzahnkranz (15, 10) sowie ein Zahnrad mit einem vollen Zahnkranz (14, 11) befestigt sind, dessen Durchmesser kleiner ist als der Durchmesser des Teilzahnkranzes (15, 10), daß jeder Teilzahnkranz (15, 10) auf der einen Kurbelarmachse (6 oder 7) über ein Ritzel (12, 16), eine Getriebewelle (9, 8) und ein Antriebszahnrad (17, 13) mit dem auf der anderen Kurbelarmachse (7 oder 6) sitzenden Zahnrad (11, 14) und mit dem zugehörigen Kettenrad (54, 55) in Antriebsverbindung steht.

2. Tretlagergetriebe nach Anspruch 1, dadurch gekennzeichnet, daß jeder Teilzahnkranz (15, 10) in Bezug auf seinen vollen Umfang nur 18 Zähne und einen Teilkreisabschnitt von 108° von 360° aufweist.

3. Tretlagergetriebe nach den Ansprüchen 1 und 2, dadurch gekennzeichnet, daß jede Kurbelarmachse (6, 7) mittels eines Freilaufes (20, 21) in der Lagerschale (2, 3) gelagert ist.

4. Tretlagergetriebe nach den Ansprüchen 1 bis 3, dadurch gekennzeichnet, daß jeder Tretkurbelarm (4, 5) durch eine Nabenverbindung (30, 31) mit der Kurbelwellenachse (6, 7) verbunden sind.

5. Tretlagergetriebe nach den Ansprüchen 1 bis 4, dadurch gekennzeichnet, daß jedes Antriebszahnrad (13, 17) durch eine Nabenverbindung (18, 19) mit der Getriebewelle (8, 9) verbunden ist.

## Claims

1. A pedal bearing gear, wherein the pedal crank arms (4,5) arranged in a bearing bush (2,3) in a manner rigidly connected to the bicycle frame (1) are centrally connected by means of a gear box (10,11;14, 15; 7,12,17; 8, 10, 19) and on the outer free ends of which is respectively arranged a free-rotating pedal (50,51), and wherein the axes (6,7) of the crank arms (6,7) are located along an axial line yet separated from one another,
characterized in that
secured to each of the crank arm axes (6,7), externally of the bearing bush (2,3), is a sprocket wheel (54,55) and internally of the hearing bush (2,3) is a toothed gear with a partial ring gear (15,10) and a toothed gear with a full ring gear (14,11) the diameter of which is smaller than the diameter of the partial ring gear (15,10), that each partial ring gear (15,10) on one of the crank arm axes (6 or 7), via a pinion (12,16), a gear shaft (9, 8) and a driving gear (17,13), is in driving communication with the toothed gear (11,14) seated on the other of said crank arm axes (7 or 6), and with the associated sprocket wheel (54,55).

2. A pedal hearing gear according to claim 1, characterized in that each partial ring gear (15,10), in relation to the full circumference thereof, comprises only 18 teeth and a partial circular segment of 108° out of 360°.

3. A pedal bearing gear according to claims 1 and 2, characterized in that each of the crank arm axes (6,7), by means of a freewheel (20,21), is located in the bearing bush (2,3).

4. A pedal hearing gear according to claims 1 through 3, characterized in that each pedal crank arm (4,5), via a hub connection (30,31) is in communication with the crank shaft axis (6, 7).

5. A pedal hearing gear according to claims 1 through 4, characterized in that each driving gear (13,17), through a hub connection (18,19), is in communication with the gear shaft (8,9).

## Revendications

1. Paliers du pédalier dans lesquels les manivelles à pédalier (4,5) logées dans une coquille (2,3) et fermement reliées au cadre (1) pour bicyclettes, sont centralement reliées par l'intermédiaire d'une transmission (10,11; 14,15; 7,12,17; 8, 10, 19) et une pédale (50,51) est disposée dans une manière librement pivotante à chacque extrémité libre extérieure desquels, et dans lesquels les axes (6, 7) manivelles sont disposés sur une ligne axiale mais de manière séparée,
caractérisé en ce qu'une roue à chaines (54, 55) est fixée sur chaque l'axe de manivelle (6,7) à l'extérieure de la coquille (2,3) et une roue à denture avec une couronne dentée partielle (15,10) et une roue à denture avec une couronne dentée complète (14,11) sont fixées à l'intérieure de la coquille (2,3), le diamètre de la dernière étant plus petit que le diamètre de la couronne dentée partitielle (15,10), que chacque couronne dentée partitielle (15,10) sur l'un des axes manivelles (6 ou 7), par l'lintermédiaire d'un pignon (12,16), d'un arbre de transmission (9,8) et d'une roue dentée motrice (17, 13) est en connexion de commande avec la roue dentée (11,14) assise sur l'autre l'axe manivelle (7 ou 6) et avec la roue à chaines (54, 55) associée.

2. Palier du pédalier selon la revendication 1,
caractérisé en ce que chacque roue dentée partielle (15,10) relatif à sa péripheérie, comporte seulement 18 dents et un segment de cercle partielle de 108° en 360°.

3. Palier du pédalier selon les revendications 1 et 2,
caractérisé en ce que chaque axe manivelle (6, 7) par l'intermédiaire de la roue libre (20,21) est logé dans la coquille (2,3).

4. Palier du pédalier selon les revendications 1 à 3,
caractérisé en ce que chaque manivelle à pédalier (4,5) est reliée à l'axe de l'arbre-manivelle (6,7) par l'intermédiaire d'une connexion à moyeu (30, 31).

5. Palier du pédalier selon les revendications 1 à 4,
caractérisé en ce que chaque roue dentée de commande (13,17) est reliée par une connexion à moyeu (18,19) à l'arbre de commande (8,9).
